# EUROPÄISCHE PATENTANMELDUNG

(11) **EP 4 399 978 A1**
(43) Veröffentlichungstag der Anmeldung: **17.07.2024**
(21) Anmeldenummer: 24151873.7
(22) Anmeldetag: 15.01.2024
(51) Int. Cl.: A23L 2/54, B01F 23/2361, B01F 23/237, A23L 2/56, A23L 2/64

(54) **DRUCKBEHÄLTER FÜR GAS UND GETRÄNKESPRUDLER MIT DRUCKBEHÄLTER**

(30) Priorität: 16.01.2023 DE 102023100844
(71) Anmelder: Jahn, Andreas, 99897 Tambach-Dietharz (DE)
(72) Erfinder: Jahn, Andreas, 99897 Tambach-Dietharz (DE)
(74) Vertreter: Liedtke & Partner Patentanwälte

(57) **Zusammenfassung**

Die Erfindung betrifft einen Getränkesprudler (1) und einen Druckbehälter (2) für ein Gas zur Verwendung in einem Getränkesprudler (1).

Erfindungsgemäß weist der Druckbehälter (2) oder/und der Getränkesprudler (1) eine Aromaspeichereinheit (4) auf, welche ausgebildet ist zur Aufnahme eines Aromas und zur Einleitung des Aromas in ein Gas, welches zur Einleitung in ein zu sprudelndes Getränk vorgesehen ist, oder in das Getränk.

## Beschreibung

Die Erfindung betrifft einen Druckbehälter für Gas und einen Getränkesprudler.

Aus dem Stand der Technik sind Getränkesprudler, auch als Wassersprudler oder Trinkwassersprudler bezeichnet, allgemein bekannt. In einer Variante weisen sie eine Grundeinheit auf, in welche eine mit Kohlenstoffdioxid befüllte Gaskartusche und eine mit Wasser befüllte Flasche eingesetzt werden. Durch Betätigen einer Betätigungseinheit an der Grundeinheit wird das Kohlenstoffdioxid in die mit Wasser befüllte Flasche eingeleitet, wodurch das Wasser gesprudelt wird. In einer weiteren Variante ist die mit Kohlenstoffdioxid befüllte Gaskartusche mit einer Trinkwasserleitung gekoppelt. Durch Betätigen eines Wasserhahns der Trinkwasserleitung in einer entsprechenden Stellung wird das Kohlenstoffdioxid in die Trinkwasserleitung und somit in das die Trinkwasserleitung durchströmende Wasser eingeleitet und dieses somit gesprudelt, so dass das gesprudelte Wasser aus dem Wasserhahn ausströmt.

Der Erfindung liegt die Aufgabe zu Grunde, einen gegenüber dem Stand der Technik verbesserten Getränkesprudler anzugeben.

Die Aufgabe wird erfindungsgemäß gelöst durch einen Getränkesprudler mit den Merkmalen des Anspruchs 1 und einen Druckbehälter mit den Merkmalen des Anspruchs 10.

Vorteilhafte Ausgestaltungen der Erfindung sind Gegenstand der Unteransprüche.

Ein Getränkesprudler, auch als Wassersprudler oder Trinkwassersprudler bezeichnet, ist insbesondere zum Sprudeln, insbesondere Karbonisieren, eines Getränkes, insbesondere Wasser, durch Einleiten eines Gases, insbesondere Kohlenstoffdioxid, vorgesehen. Der Getränkesprudler kann zum diskontinuierlichen Sprudeln einer endlichen Getränkemenge oder zum kontinuierlichen Sprudeln einer unbestimmten Getränkemenge ausgebildet sein.

Ein Getränkesprudler zum diskontinuierlichen Sprudeln einer endlichen Getränkemenge ist typischerweise als ein transportables Gerät ausgestaltet und kann beispielsweise eine Grundeinheit umfassen, die Folgendes aufweist: eine Druckbehälteraufnahme zur Aufnahme eines Druckbehälters, eine Getränkebehälteraufnahme zur Aufnahme eines Getränkebehälters und eine Betätigungseinheit zum Öffnen einer fluidischen Verbindung zwischen dem in der Druckbehälteraufnahme angeordneten Druckbehälter und dem in der Getränkebehälteraufnahme angeordneten Getränkebehälter, wenn beide Behälter in der jeweiligen Aufnahme angeordnet sind. Der Druckbehälter wird auch als Druckgasbehälter, Gaskartusche, Zylinder oder Gaszylinder bezeichnet. Der Getränkebehälter ist insbesondere eine Flasche. Sind ein mit Gas, insbesondere mit Kohlenstoffdioxid, befüllter Druckbehälter und ein mit einem Getränk, insbesondere Wasser, insbesondere Trinkwasser, befüllter Getränkebehälter in der jeweiligen Aufnahme der Grundeinheit angeordnet, kann durch Betätigen der Betätigungseinheit an der Grundeinheit, wodurch die fluidische Verbindung zwischen dem in der Druckbehälteraufnahme angeordneten Druckbehälter und dem in der Getränkebehälteraufnahme angeordneten Getränkebehälter geöffnet wird, das Getränk im Getränkebehälter gesprudelt werden, da dann das Gas aus dem Druckbehälter in den Getränkebehälter einströmt, beispielsweise durch eine Gasführungsleitung.

Ein Getränkesprudler zum kontinuierlichen Sprudeln einer unbestimmten Getränkemenge ist typischerweise fest installiert und beispielsweise mit einer Haus-Wasserinstallation oder einer Schankanlage verbunden, um beispielsweise Trinkwasser bzw. Biere, Limonaden und dergleichen auf dem Weg zu einem Wasserhahn bzw. Zapfhahn (nachfolgend einheitlich als Hahn bezeichnet) zu sprudeln, und kann beispielsweise eine Grundeinheit umfassen, die Folgendes aufweist: eine Druckbehälteraufnahme zur Aufnahme eines Druckbehälters, einen in der Getränkeführungsleitung angeordneten Karbonisator zur Einleitung von Gas in das zu sprudelnde Getränk und eine Betätigungseinheit zum Öffnen einer fluidischen Verbindung zwischen dem in der Druckbehälteraufnahme angeordneten Druckbehälter und dem durch die Getränkeführungsleitung dem Karbonisator zugeführten Getränk. Optional kann weiterhin ein in der Getränkeführungsleitung angeordneter Speicherbehälter zum Zwischenspeichern bereits gesprudelten Getränks vorgesehen sein, bis durch Betätigen des Hahns gesprudeltes Getränk angefordert wird. Durch Betätigen der Betätigungseinheit an der Grundeinheit, wodurch die fluidische Verbindung zwischen dem in der Druckbehälteraufnahme angeordneten Druckbehälter und dem in der Getränkeführungsleitung angeordneten Karbonisator geöffnet wird, kann das Getränk in der Getränkeführungsleitung gesprudelt werden, da dann das Gas aus dem Druckbehälter in den Karbonisator einströmt, beispielsweise durch eine Gasführungsleitung. Die Betätigungseinheit kann beispielsweise durch einen Druckregler realisiert sein, der bei einem definierten Druckabfall, wie er beim Öffnen des Hahns auftritt, die fluidische Verbindung zwischen dem Druckbehälter und dem Karbonisator herstellt und diese fluidische Verbindung unterbricht, wenn der Druck in der Gasführungsleitung einen definierten Druck erreicht, weil der Hahn geschlossen wurde. Der Hahn kann insoweit als Bestandteil des Getränkesprudlers angesehen werden.

Erfindungsgemäß weist der Getränkesprudler eine Aromaspeichereinheit auf, welche ausgebildet ist zur Aufnahme eines Aromas und zur Einleitung des Aromas in das Gas, welches zur Einleitung in das zu sprudelnde Getränk vorgesehen ist, oder zur Einleitung des Aromas in das Getränk. In bestimmten Ausgestaltungen der Erfindung ist die Aromaspeichereinheit Bestandteil des Druckbehälters.

Der Getränkesprudler bzw. der Druckbehälter kann auch mehrere solche Aromaspeichereinheiten aufweisen. Die folgende Beschreibung, insbesondere bezüglich der Ausgestaltung, Anordnung und Funktionsweise der Aromaspeichereinheit, gilt dann für die jeweilige Aromaspeichereinheit. Dabei können die mehreren Aromaspeichereinheiten bezüglich ihrer Ausgestaltung, Anordnung und Funktionsweise gleich oder unterschiedlich sein. Die mehreren Aromaspeichereinheiten sind insbesondere vorteilhaft zur Bereitstellung verschiedener Aromen. Es ist dann somit insbesondere vorgesehen, dass in jeder der Aromaspeichereinheiten ein anderes Aroma gespeichert oder speicherbar ist. Zur Aromatisierung eines jeweiligen Getränks kann dann somit eines der Aromen ausgewählt werden. Es ist somit insbesondere vorgesehen, dass die Aromaspeichereinheiten zur Aromatisierung des Getränks jeweils wahlweise zugeschaltet werden können. Der Getränkesprudler weist somit insbesondere eine Aromaauswahlfunktion zur Auswahl des Aromas und somit der das ausgewählte Aroma bereitstellenden Aromaspeichereinheit auf. Er weist somit insbesondere eine Zuschaltfunktion zum Zuschalten der jeweiligen ausgewählten Aromaspeichereinheit für das Aromatisieren des jeweiligen Getränks auf.

Das Gas ist, wie oben bereits erwähnt, insbesondere Kohlenstoffdioxid. Durch das Einleiten des Gases in das Getränk wird das Getränk gesprudelt.

Durch das Einleiten des Aromas aus der Aromaspeichereinheit in das Gas und mit diesem in das Getränk oder durch das Einleiten des Aromas aus der Aromaspeichereinheit direkt in das Getränk wird das Getränk aromatisiert, d. h. es erhält insbesondere einen dem Aroma entsprechenden Geschmack.

Zum Einleiten des Aromas in das Gas oder direkt in das Getränk ist die Aromaspeichereinheit insbesondere derart ausgebildet, dass das Gas vor dem Einleiten in das Getränk bzw. das Getränk selbst direkt durch die Aromaspeichereinheit hindurchströmt und dabei aromatisiert wird, d. h. das gespeicherte Aroma oder einen Anteil des gespeicherten Aromas mitnimmt. Zum Einleiten des Aromas in das Gas kann die Aromaspeichereinheit alternativ beispielsweise derart ausgebildet sein, dass das Gas an der Aromaspeichereinheit seitlich vorbeiströmt und dabei das Aroma oder einen Anteil des Aromas aus der Aromaspeichereinheit ansaugt, insbesondere durch den Venturi-Effekt, und auf diese Weise aromatisiert wird, d. h. das angesaugte Aroma oder den angesaugten Anteil des Aromas mitnimmt.

Alternativ kann die Aromaspeichereinheit beispielsweise derart ausgebildet sein, dass sie zum Einleiten des Aromas in das Gas oder direkt in das Getränk öffnet und das Aroma oder einen Anteil des Aromas freigibt. Insbesondere hierzu ist die Aromaspeichereinheit beispielsweise als ein Behälter ausgebildet oder weist einen Behälter auf, in dem das Aroma gespeichert wird. Das Aroma oder der Anteil des Aromas tropft oder strömt dann beispielsweise in das Gas vor dessen Einleiten in das Getränk oder direkt in das Getränk. Das Strömen in das Gas kann beispielsweise auch durch das Ansaugen des Aromas oder des Anteils des Aromas durch das vorbeiströmende Gas erfolgen, insbesondere mittels des Venturi-Effekts, wie oben beschrieben.

Zur Aufnahme des Aromas in die Aromaspeichereinheit ist beispielsweise ein Befüllen der Aromaspeichereinheit mit dem Aroma oder mit einer Komponente, die das Aroma enthält, vorgesehen.

Durch die erfindungsgemäße Aromaspeichereinheit ist es nicht mehr erforderlich, das Aroma direkt in einen Druckbehälter zur Speicherung des Gases einzufüllen, und ebenso ist es nicht mehr erforderlich, das Aroma vor oder nach dem Sprudeln des Getränks manuell in das Getränk einzufüllen. Die erfindungsgemäße Aromaspeichereinheit ermöglicht insbesondere ein automatisches Aromatisieren des Getränks, wobei dies insbesondere während des Sprudelns erfolgt.

Die Aromaspeichereinheit ist beispielsweise als eine Kartusche, als eine Patrone, als ein Pad oder als ein Vlies oder als eine poröse Einheit ausgebildet oder weist als Komponente, die das Aroma enthält, beispielsweise eine Kartusche, eine Patrone, ein Pad oder ein Vlies oder eine poröse Einheit auf. Das Pad und das Vlies sind insbesondere dazu vorgesehen, zur Einleitung des Aromas in das Gas oder in das Getränk vom Gas bzw. vom Getränk durchströmt zu werden. Die poröse Einheit kann dazu vorgesehen, zur Einleitung des Aromas in das Gas oder in das Getränk vom Gas bzw. vom Getränk durchströmt oder angeströmt zu werden. Die Kartusche oder Patrone ist insbesondere ein als Hohlkörper, insbesondere Tank, ausgebildeter Behälter für das Aroma, aus welchem es beispielsweise herausgesaugt werden kann oder ausströmen kann oder heraustropfen kann.

Es kann vorteilhafterweise vorgesehen sein, dass die Aromaspeichereinheit auswechselbar ist oder dass die Komponente der Aromaspeichereinheit, die das Aroma enthält, beispielsweise die Kartusche oder Patrone oder das Pad oder das Vlies oder die poröse Einheit, auswechselbar ist. Dadurch kann auf einfache Weise ein Nachfüllen des Aromas ermöglicht werden. Des Weiteren können dadurch beispielsweise verschiedene Aromen verwendet werden, ohne hierfür den Druckbehälter auswechseln zu müssen. Im Gegensatz dazu ist bei dem oben beschriebenen aus dem Stand der Technik bekannten Einfüllen des Aromas in den Druckbehälter ein solches Auswechseln des Druckbehälters erforderlich, wenn ein anderes Aroma für das Getränk gewünscht wird.

In einer möglichen Ausführungsform ist die Aromaspeichereinheit beispielsweise in oder an einer Gasführungsleitung zur Führung des Gases vom Druckbehälter in das zu sprudelnde Getränk angeordnet. Die Aromaspeichereinheit ist beispielsweise zwischen dem Druckbehälter und dem Getränkebehälter oder in einem Ausgangsbereich, insbesondere an einer Sprudeldüse, der Gasführungsleitung in oder an der Gasführungsleitung angeordnet. Das Aroma ist bei dieser Ausführungsform somit in das durch die Aromaspeichereinheit hindurchströmende oder an der Aromaspeichereinheit vorbeiströmende Gas einleitbar, bevor dieses Gas in das zu sprudelnde Getränk einströmt. Das Getränk wird somit mit aromatisiertem Gas gesprudelt, wodurch das Getränk aromatisiert wird.

Die beschriebene Anordnung ist auch unabhängig vom Getränkesprudler möglich, d. h. beispielsweise ist nur die Gasführungsleitung mit der Aromaspeichereinheit vorgesehen und beispielsweise mit einem Getränkesprudler koppelbar. Die Aromaspeichereinheit ist dann beispielsweise zwischen einem Anschluss für den Druckbehälter und dem Getränkebehälter oder in einem Ausgangsbereich, insbesondere an einer Sprudeldüse, der Gasführungsleitung in oder an der Gasführungsleitung angeordnet.

Es ist insbesondere vorgesehen, dass die Gasführungsleitung und die Aromaspeichereinheit fluidisch miteinander verbunden sind oder schaltbar miteinander verbindbar sind. Das Schalten der fluidischen Verbindung kann beispielsweise manuell oder automatisch erfolgen. Durch das schaltbare Verbinden kann insbesondere ermöglicht werden, dass das Getränk auch mittels des Gases gesprudelt werden kann, ohne dem Getränk dabei gleichzeitig Aroma zuzusetzen.

Ist die Aromaspeichereinheit, wie oben beschrieben, in einem Ausgangsbereich, insbesondere an der Sprudeldüse, der Gasführungsleitung in oder an der Gasführungsleitung angeordnet, dann kann sie während des Sprudelns in den Getränkebehälter hineinragen oder darin positioniert sein. Das Aroma wird bei dieser Ausführungsform dennoch vorteilhafterweise nur in das die Gasführungsleitung durchströmende Gas eingeleitet und gelangt dann zusammen mit dem Gas in das Getränk.

Beispielsweise weist die Gasführungsleitung im Bereich der Aromaspeichereinheit eine Saugöffnung zum Ansaugen des Aromas aus der Aromaspeichereinheit aufgrund einer Strömung des Gases durch die Gasführungsleitung auf. Das Ansaugen des Aromas erfolgt insbesondere durch Nutzung des Venturi-Effektes. Hierbei ist insbesondere vorgesehen, dass das Aroma aufgrund des an der Saugöffnung vorbeiströmenden Gases angesaugt wird.

In einer weiteren möglichen Ausführungsform ist die Aromaspeichereinheit beispielsweise im oder am Getränkebehälter oder einer Getränkeführungsleitung für das Getränk angeordnet. Bei dieser Ausführungsform ist insbesondere vorgesehen, dass das Aroma direkt in das Getränk einleitbar ist, beispielsweise vor dem Sprudeln, während des Sprudelns und/oder nach dem Sprudeln des Getränks. Die beschriebene Anordnung ist auch unabhängig vom Getränkesprudler möglich, d. h. beispielsweise ist nur der Getränkebehälter mit der Aromaspeichereinheit vorgesehen und beispielsweise mit einem Getränkesprudler koppelbar oder es ist beispielsweise nur die Getränkeführungsleitung mit der Aromaspeichereinheit vorgesehen und mit einem Getränkesprudler koppelbar.

Die Getränkeführungsleitung ist beispielsweise eine Trinkwasserleitung. Hierbei ist insbesondere auch der Druckbehälter mit dieser Trinkwasserleitung gekoppelt. Beispielsweise durch Betätigen eines Hahns der Trinkwasserleitung in einer entsprechenden Stellung kann dann das Gas und auch das Aroma in die Trinkwasserleitung und somit in das die Trinkwasserleitung durchströmende Wasser eingeleitet und dieses somit gesprudelt und aromatisiert werden, so dass das gesprudelte und aromatisierte Wasser aus dem Hahn ausströmt. Beispielweise kann noch eine weitere Stellung des Hahns vorgesehen sein, in welcher nur das Gas in die Trinkwasserleitung und somit in das die Trinkwasserleitung durchströmende Wasser eingeleitet wird, so dass das Wasser nur gesprudelt wird und das gesprudelte Wasser aus dem Hahn ausströmt, und/oder es kann beispielweise noch eine weitere Stellung des Hahns vorgesehen sein, in welcher nur das Aroma in die Trinkwasserleitung und somit in das die Trinkwasserleitung durchströmende Wasser eingeleitet wird, so dass das Wasser nur aromatisiert wird und das aromatisierte und nicht gesprudelte Wasser aus dem Hahn ausströmt, und/oder es kann beispielsweise noch eine weitere Stellung des Hahns vorgesehen sein, in welcher weder Aroma noch Gas in die Trinkwasserleitung und somit in das die Trinkwasserleitung durchströmende Wasser eingeleitet wird, so dass das Wasser weder aromatisiert noch gesprudelt wird und somit normales Trinkwasser aus dem Hahn ausströmt. In analoger Weise kann der Druckbehälter mit einer Zapfleitung einer Zapfeinrichtung oder dergleichen gekoppelt sein und das dadurch geführte Getränk auf diese Weise beim Öffnen des zugehörigen Hahns karbonisiert und aromatisiert werden.

Es ist insbesondere vorgesehen, dass der Getränkebehälter bzw. die Getränkeführungsleitung und die Aromaspeichereinheit fluidisch miteinander verbunden sind oder schaltbar miteinander verbindbar sind. Bei der Getränkeführungsleitung kann dies beispielsweise auf die oben beschriebene Weise durch Betätigen des Hahns in der entsprechenden Stellung erfolgen. Das Schalten der fluidischen Verbindung kann beispielsweise manuell oder automatisch erfolgen. Durch das schaltbare Verbinden kann insbesondere ermöglicht werden, dass das Getränk auch mittels des Gases gesprudelt werden kann, ohne dem Getränk dabei gleichzeitig Aroma zuzusetzen.

In einer weiteren möglichen Ausführungsform ist die Aromaspeichereinheit beispielsweise in oder an dem Druckbehälter, in welchem das Gas gespeichert ist, angeordnet. Bei dieser Ausführungsform ist somit insbesondere vorgesehen, dass das Aroma in das Gas im Druckbehälter einleitbar ist, insbesondere in das aus dem Druckbehälter ausströmende Gas, bevor es den Druckbehälter verlässt, insbesondere in einem Ventil des Druckbehälters oder im Bereich des Ventils. Das Aroma ist hierbei insbesondere in das das Ventil durchströmende Gas einleitbar. Dadurch wird nicht das gesamte Gas im Druckbehälter gleichzeitig aromatisiert, sondern nur das jeweilige aus dem Druckbehälter ausströmende Gas, insbesondere unmittelbar vor dem Ausströmen. Alternativ kann jedoch auch vorgesehen sein, dass das Aroma direkt in den Druckbehälter und somit insbesondere direkt in das sich darin befindende Gas einleitbar ist, wodurch insbesondere das gesamte Gas im Druckbehälter aromatisiert wird.

Die beschriebene Anordnung ist auch unabhängig vom Getränkesprudler möglich, d. h. beispielsweise ist nur der Druckbehälter mit der Aromaspeichereinheit vorgesehen und beispielsweise mit einem Getränkesprudler koppelbar.

Es ist insbesondere vorgesehen, dass der Druckbehälter und die Aromaspeichereinheit fluidisch miteinander verbunden sind oder schaltbar miteinander verbindbar sind. Dies ist insbesondere vorteilhaft bei der beschriebenen Variante, in welcher das Aroma in das das Ventil durchströmende Gas einleitbar ist. Das Schalten kann hierbei beispielsweise durch Betätigen des Ventils erfolgen, d. h. wenn dieses in eine Ausströmstellung bewegt wird, wird auch die fluidische Verbindung hergestellt. Beispielsweise kann hierbei auch vorgesehen sein, dass das Ventil auch in die Ausströmstellung oder in eine weitere Ausströmstellung bewegt werden kann, ohne dabei die fluidische Verbindung herzustellen, beispielsweise durch eine entsprechende andere Betätigung des Ventils. Dadurch wird es ermöglicht, dass nicht aromatisiertes Gas ausströmt und somit das Getränk nur mittels des Gases gesprudelt wird und nicht zusätzlich auch aromatisiert wird.

In einer möglichen Ausführungsform ist die Aromaspeichereinheit beispielsweise am Ventil des Druckbehälters angeordnet. Dabei kann die Aromaspeichereinheit beispielsweise auf die oben beschriebene Weise im Druckbehälter, d. h. in einem Innenraum des Druckbehälters, am Ventil angeordnet sein oder außerhalb des Druckbehälters am Ventil angeordnet sein. Insbesondere bei der Anordnung im Druckbehälter ist die Aromaspeichereinheit insbesondere in einem unteren Bereich oder an einer Unterseite des Ventils angeordnet. Bei dieser Ausführungsform ist somit insbesondere vorgesehen, dass das Aroma in das aus dem Druckbehälter ausströmende Gas einleitbar ist, insbesondere im Bereich des Ventils, insbesondere während das Gas durch das Ventil strömt oder unmittelbar danach, somit beispielsweise bevor das Gas den Druckbehälter verlässt und/oder unmittelbar nachdem das Gas den Druckbehälter verlassen hat. Das Aroma ist hierbei insbesondere in das das Ventil durchströmende Gas einleitbar, beispielsweise indem das Gas vor dem Durchströmen des Ventils und/oder während des Durchströmens des Ventils und/oder nach dem Durchströmen des Ventils die Aromaspeichereinheit durchströmt oder an dieser vorbeiströmt und dabei insbesondere das Aroma ansaugt oder indem das Aroma, insbesondere bei Betätigung des Ventils, d. h. bei Bewegen des Ventils in die Ausströmstellung, das Aroma beispielsweise tropfenweise freigibt und diese Aromatropfen vom das Ventil durchströmenden Gas aufgenommen werden.

Die beschriebene Anordnung ist auch unabhängig vom Getränkesprudler möglich, d. h. beispielsweise ist nur das Ventil mit der Aromaspeichereinheit für den Druckbehälter vorgesehen und beispielsweise mit einem Getränkesprudler und/oder mit einem Druckbehälter koppelbar oder es ist der Druckbehälter, aufweisend das Ventil mit der Aromaspeichereinheit vorgesehen und mit einem Getränkesprudler koppelbar.

Es ist insbesondere vorgesehen, dass das Ventil und die Aromaspeichereinheit fluidisch miteinander verbunden sind oder schaltbar miteinander verbindbar sind. Das Schalten kann hierbei beispielsweise, wie oben bereits beschrieben, durch Betätigen des Ventils erfolgen, d. h. wenn dieses in die Ausströmstellung bewegt wird, wird auch die fluidische Verbindung hergestellt. Es kann somit insbesondere vorgesehen sein, dass die Aromaspeichereinheit in einer geschlossenen Ventilstellung durch das Ventil verschlossen ist und in der Ausströmstellung des Ventils fluidisch mit dem Ventil, insbesondere mit einem Gasausströmkanal des Ventils, verbunden ist.

Beispielsweise kann hierbei auch vorgesehen sein, dass das Ventil, wie oben bereits erwähnt, auch in die Ausströmstellung oder in eine weitere Ausströmstellung bewegt werden kann, ohne dabei die fluidische Verbindung herzustellen, beispielsweise durch eine entsprechende andere Betätigung des Ventils. Dadurch wird es ermöglicht, dass nicht aromatisiertes Gas ausströmt und somit das Getränk nur mittels des Gases gesprudelt wird und nicht zusätzlich auch aromatisiert wird.

In einer möglichen Ausführungsform weist das Ventil eine Aromabefüllöffnung zur Befüllung der Aromaspeichereinheit mit Aroma durch das Ventil hindurch auf. Dadurch ist es nicht erforderlich, zur Befüllung der Aromaspeichereinheit das Ventil aus dem Druckbehälter zu entfernen, sondern die Befüllung der Aromaspeichereinheit mit Aroma kann durch das Ventil hindurch erfolgen und somit auf ähnliche Weise wie die Befüllung des Druckbehälters mit Gas.

Um ein Entweichen von Gas aus dem Druckbehälter während des Befüllens der Aromaspeichereinheit über die Aromabefüllöffnung zu vermeiden, ist insbesondere vorgesehen, dass die Aromabefüllöffnung, insbesondere in einer geöffneten Stellung, nicht fluidisch mit dem Innenraum des Druckbehälters verbunden ist, d. h. fluidisch von diesem getrennt ist. Hierzu ist insbesondere vorgesehen, dass das Ventil entsprechend ausgebildet ist. Es kann beispielsweise vorgesehen sein, dass die Aromabefüllöffnung durch eine entsprechende Betätigung des Ventils oder einer Komponente des Ventils zu öffnen und zu schließen ist. Für das Öffnen der Aromabefüllöffnung befindet sich das Ventil insbesondere in der geschlossenen Ventilstellung und verbleibt insbesondere in dieser geschlossenen Ventilstellung, während die Aromabefüllöffnung geöffnet ist.

Beispielsweise kann das Ventil derart ausgebildet sein, dass die Aromabefüllöffnung mittels eines Ventilstößels zu öffnen und zu schließen ist, mittels welchem auch das Ventil in die Ausströmstellung und in die geschlossene Ventilstellung bewegbar ist. In diesem Fall ist das Ventil insbesondere derart ausgebildet, dass das Ventil durch Bewegen des Ventilstößels in eine Ausströmposition in die Ausströmstellung bewegbar ist und durch Bewegen des Ventilstößels in eine von der Ausströmposition abweichende Geschlossenposition in die geschlossene Ventilstellung bewegbar ist und der Ventilstößel zudem in eine von der Ausströmposition und der Geschlossenposition abweichende Aromabefüllposition bewegbar ist, in welcher die Aromabefüllöffnung geöffnet ist, wobei sich das Ventil insbesondere in der geschlossenen Ventilstellung befindet, d. h. der Innenraum des Druckbehälters durch das Ventil verschlossen ist.

Alternativ kann zum Öffnen und Schließen der Aromabefüllöffnung beispielsweise ein separater Stößel oder ein anderes Verschlusselement vorgesehen sein.

Der in dieser Anmeldung erwähnte Druckbehälter ist insbesondere ein Druckgasbehälter und zur Aufnahme des Gases unter hohem Druck ausgebildet. Insbesondere ist der Druckbehälter eine so genannte Gaskartusche, insbesondere für den Getränkesprudler.

Ausführungsbeispiele der Erfindung werden im Folgenden anhand von Zeichnungen näher erläutert.

Darin zeigen:
- Figur 1: schematisch eine Ausführungsform eines Getränkesprudlers,
- Figur 2: schematisch eine weitere Ausführungsform eines Getränkesprudlers,
- Figur 3: schematisch eine weitere Ausführungsform eines Getränkesprudlers,
- Figur 4: schematisch einen Druckbehälter einer weiteren Ausführungsform eines Getränkesprudlers, wobei der Druckbehälter ein Ventil aufweist, und wobei das Ventil in einer geschlossenen Ventilstellung dargestellt ist,
- Figur 5: schematisch den Druckbehälter aus Figur 4, wobei das Ventil in einer Ausströmstellung dargestellt ist, und
- Figur 6: schematisch den Druckbehälter aus Figur 4, wobei das Ventil in der Ausströmstellung dargestellt ist und ein Ausströmen eines Gases und eines Aromas aus dem Druckbehälter dargestellt sind.

Einander entsprechende Teile sind in allen Figuren mit den gleichen Bezugszeichen versehen.

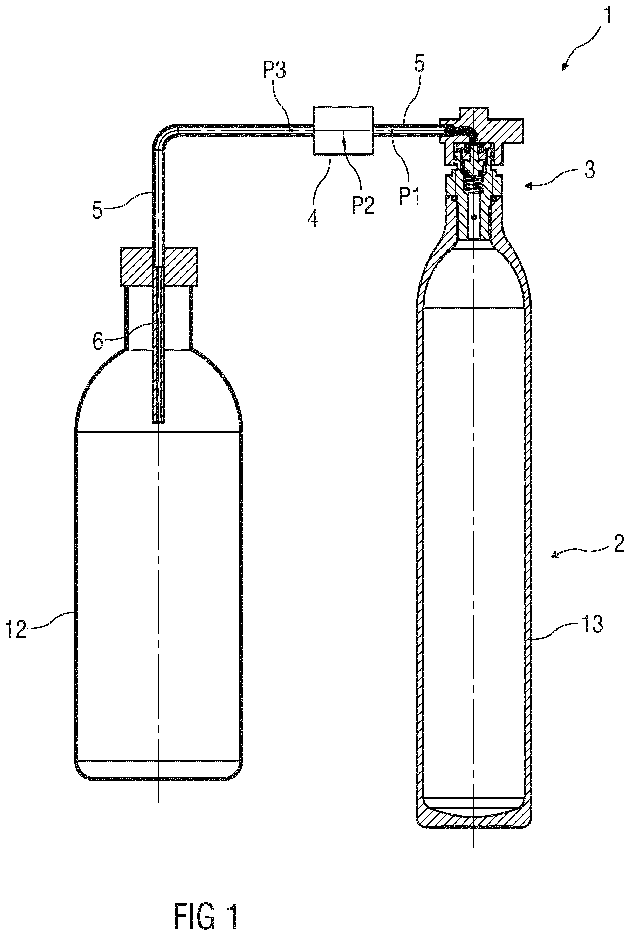

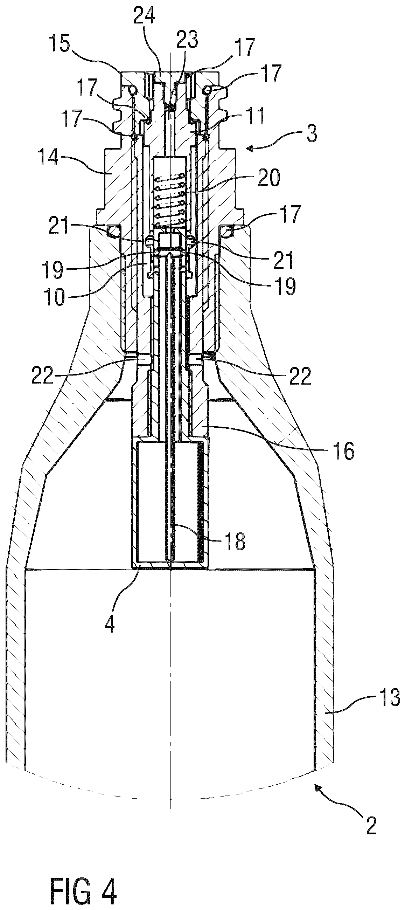

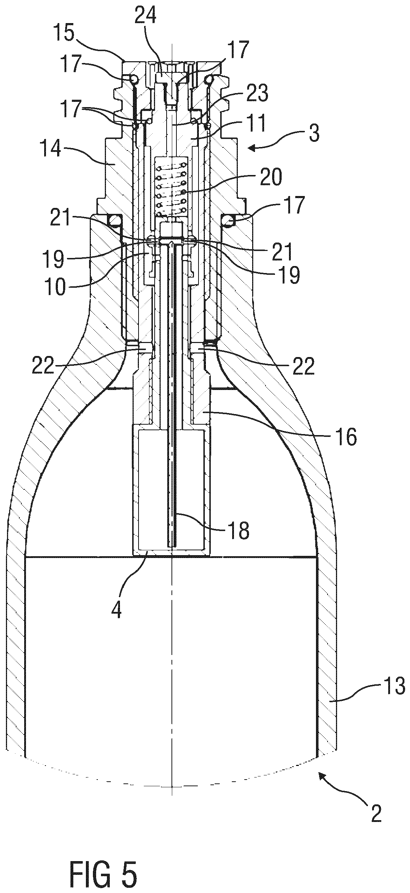

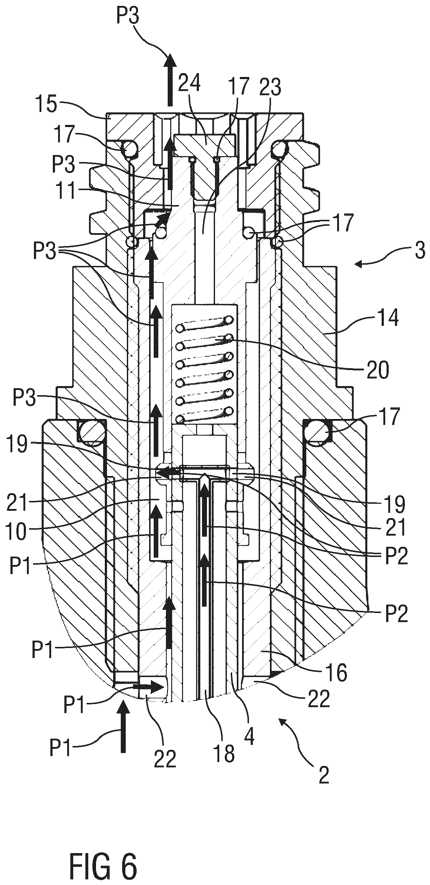

Die Figuren 1 bis 3 zeigen beispielhaft verschiedene mögliche Ausführungsformen eines Getränkesprudlers 1. Die Figuren 4 bis 6 zeigen beispielhaft einen Druckbehälter 2 einer weiteren Ausführungsform oder für eine weitere Ausführungsform des Getränkesprudlers 1, wobei Figur 4 eine geschlossene Ventilstellung eines Ventils 3 des Druckbehälters 2 zeigt und die Figuren 5 und 6 eine Ausströmstellung des Ventils 3 zeigen. Dabei ist in Figur 6 schematisch ein Ausströmen eines Gases, insbesondere Kohlenstoffdioxid, und eines Aromas aus dem Druckbehälter 2 dargestellt, wobei erste Pfeile P1 das strömende Gas, zweite Pfeile P2 das strömende Aroma und dritte Pfeile P3 das strömende aromatisierte Gas, d. h. das mit dem Aroma versetzte Gas, also ein Gas-Aroma-Gemisch, zeigen.

Der Getränkesprudler 1 weist eine Aromaspeichereinheit 4 auf, welche ausgebildet ist zur Aufnahme eines Aromas und, in den dargestellten Beispielen, zur Einleitung des Aromas in das Gas, welches zur Einleitung in ein zu sprudelndes Getränk vorgesehen ist. Das Getränk befindet sich in den Beispielen gemäß den Figuren 1 bis 3 jeweils in einem beispielsweise als Wasserflasche ausgebildeten Getränkebehälter 12.

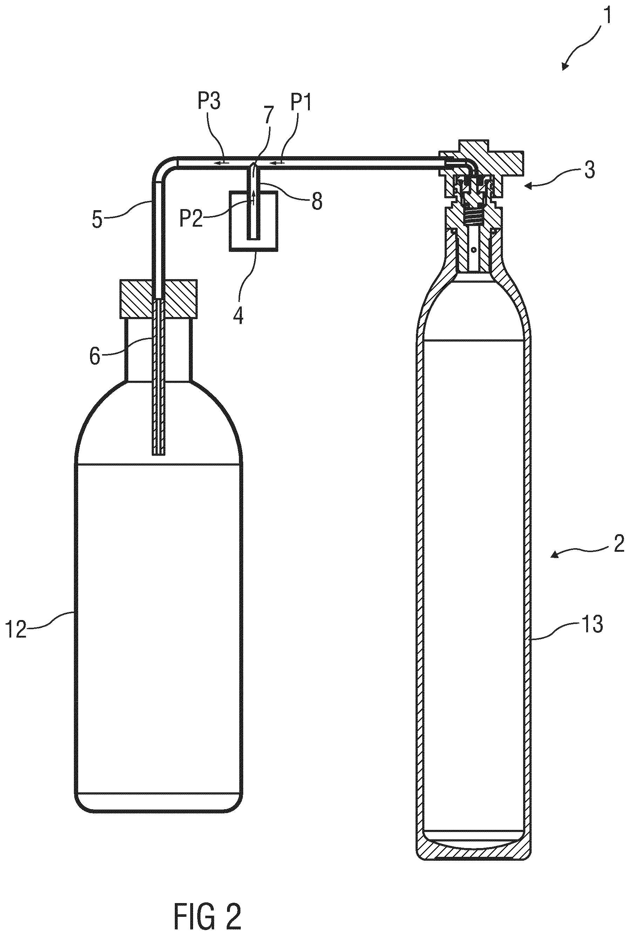

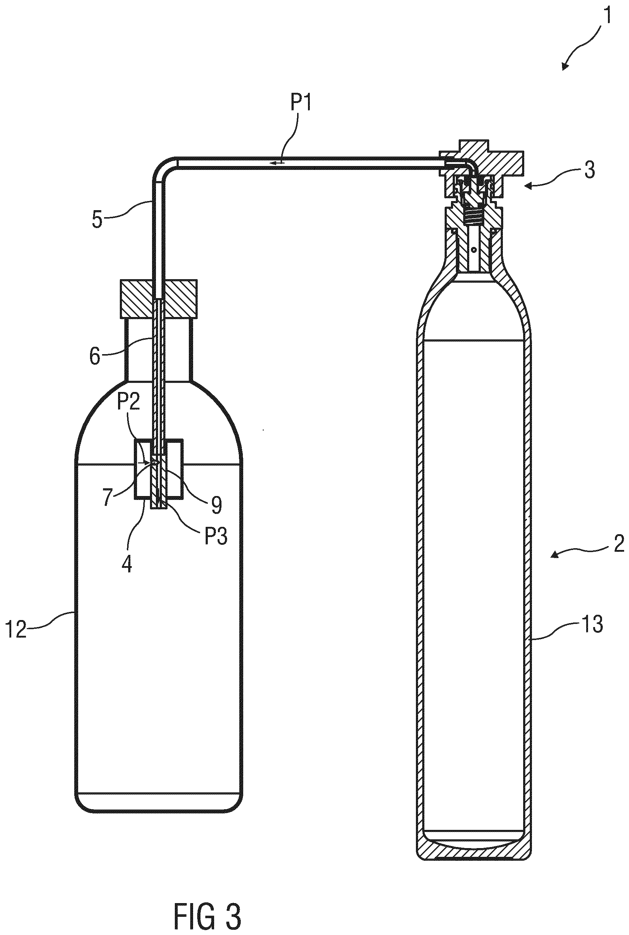

Zum Einleiten des Aromas in das Gas ist die Aromaspeichereinheit 4 beispielsweise derart ausgebildet, dass das Gas vor dem Einleiten in das Getränk durch die Aromaspeichereinheit 4 hindurchströmt und dabei aromatisiert wird, d. h. das gespeicherte Aroma oder einen Anteil des gespeicherten Aromas mitnimmt, wie beispielhaft in den Figuren 1 und 3 gezeigt, oder beispielsweise derart ausgebildet, dass das Gas an der Aromaspeichereinheit 4 seitlich vorbeiströmt und dabei das Aroma oder einen Anteil des Aromas aus der Aromaspeichereinheit 4 ansaugt, insbesondere durch den Venturi-Effekt, und auf diese Weise aromatisiert wird, d. h. das angesaugte Aroma oder den angesaugten Anteil des Aromas mitnimmt, wie beispielhaft in den Figuren 2 und 4 bis 6 gezeigt. Dabei kann in dem Beispiel gemäß Figur 3 beispielsweise ebenfalls der Venturi-Effekt genutzt werden, denn das Gas strömt hier zwar durch die Aromaspeichereinheit 4 hindurch, verbleibt dabei jedoch in einer Gasführungsleitung 5, insbesondere in einer Sprudeldüse 6 der Gasführungsleitung 5, welche im Bereich der Aromaspeichereinheit 4 eine Saugöffnung 7 zum Ansaugen des Aromas aus der Aromaspeichereinheit 4 aufweist.

Zur Aufnahme des Aromas in die Aromaspeichereinheit 4 ist beispielsweise ein Befüllen der Aromaspeichereinheit 4 mit dem Aroma oder mit einer Komponente, die das Aroma enthält, vorgesehen.

Die Aromaspeichereinheit 4 ist beispielsweise als eine Kartusche, als eine Patrone, als ein Pad oder als ein Vlies oder als eine poröse Einheit ausgebildet oder weist als Komponente, die das Aroma enthält, beispielsweise eine Kartusche, eine Patrone, ein Pad oder ein Vlies oder eine poröse Einheit auf. Das Pad und das Vlies sind insbesondere dazu vorgesehen, zur Einleitung des Aromas in das Gas vom Gas durchströmt zu werden. Die poröse Einheit kann dazu vorgesehen sein, zur Einleitung des Aromas in das Gas vom Gas durchströmt oder angeströmt zu werden. Die Kartusche oder Patrone ist insbesondere ein als Hohlkörper, insbesondere Tank, ausgebildeter Behälter für das Aroma, aus welchem es beispielsweise herausgesaugt werden kann oder ausströmen kann oder heraustropfen kann.

Es kann vorteilhafterweise vorgesehen sein, dass die Aromaspeichereinheit 4 auswechselbar ist oder dass die Komponente der Aromaspeichereinheit 4, die das Aroma enthält, beispielsweise die Kartusche oder Patrone oder das Pad oder das Vlies oder die poröse Einheit, auswechselbar ist.

In der in Figur 1 dargestellten Ausführungsform ist die Aromaspeichereinheit 4 in der Gasführungsleitung 5 zur Führung des Gases vom Druckbehälter 2 in das zu sprudelnde Getränk angeordnet. In den in den Figuren 2 und 3 dargestellten Ausführungsformen ist die Aromaspeichereinheit 4 jeweils an der Gasführungsleitung 5 zur Führung des Gases vom Druckbehälter 2 in das zu sprudelnde Getränk angeordnet. In Figur 2 ist die Aromaspeichereinheit 4 mittels einer Verbindungsleitung 8 an der Gasführungsleitung 5 angeordnet. In Figur 3 ist die Aromaspeichereinheit 4 an der Sprudeldüse 6 der Gasführungsleitung 5 angeordnet. Hierbei ist in der Aromaspeichereinheit 4 eine Verlängerung 9 der Gasführungsleitung 5, insbesondere von deren Sprudeldüse 6, ausgebildet. Die Saugöffnung 7 ist dabei in dieser Verlängerung 9 ausgebildet.

Es ist insbesondere vorgesehen, dass die Gasführungsleitung 5 und die Aromaspeichereinheit 4 fluidisch miteinander verbunden sind, wie in den Figuren 1 bis 3 gezeigt, oder schaltbar miteinander verbindbar sind. Das Schalten der fluidischen Verbindung kann beispielsweise manuell oder automatisch erfolgen. Durch das schaltbare Verbinden kann insbesondere ermöglicht werden, dass das Getränk auch mittels des Gases gesprudelt werden kann, ohne dem Getränk dabei gleichzeitig Aroma zuzusetzen.

Wie oben bereits erwähnt, weist die Gasführungsleitung 5 in einigen Ausführungsformen, beispielhaft dargestellt in den Figuren 2 und 3, im Bereich der Aromaspeichereinheit 4 die Saugöffnung 7 zum Ansaugen des Aromas aus der Aromaspeichereinheit 4 aufgrund der Strömung des Gases durch die Gasführungsleitung 5 auf. Das Ansaugen des Aromas erfolgt insbesondere durch Nutzung des Venturi-Effektes. Hierbei ist insbesondere vorgesehen, dass das Aroma aufgrund des an der Saugöffnung 7 vorbeiströmenden Gases angesaugt wird. Im Beispiel gemäß Figur 2 ist die Verbindungsleitung 8 und über diese die Aromaspeichereinheit 4 mit dieser Saugöffnung 7 der Gasführungsleitung 5 fluidisch verbunden. Im Beispiel gemäß Figur 3 ist die Saugöffnung 7 in der Verlängerung 9 der Gasführungsleitung 5, insbesondere der Sprudeldüse 6, ausgebildet.

In der in den Figuren 4 bis 6 dargestellten Ausführungsform ist die Aromaspeichereinheit 4 am Ventil 3 des Druckbehälters 2 angeordnet. Dabei ist die Aromaspeichereinheit 4 im Druckbehälter 2, d. h. in einem Innenraum des Druckbehälters 2, am Ventil 3 angeordnet, insbesondere in einem unteren Bereich des Ventils 3. Bei dieser Ausführungsform ist somit vorgesehen, dass das Aroma im Bereich des Ventils 3 in das aus dem Druckbehälter 2 ausströmende Gas einleitbar ist, insbesondere während das Gas durch das Ventil 3 strömt. Im dargestellten Beispiel erfolgt dies, indem das Gas während des Durchströmens des Ventils 3 an der Aromaspeichereinheit 4 vorbeiströmt und dabei das Aroma ansaugt.

Bei der dargestellten Ausführungsform sind das Ventil 3 und die Aromaspeichereinheit 4 schaltbar miteinander verbindbar. Das Schalten erfolgt durch Betätigen des Ventils 3, d. h. wenn dieses in die Ausströmstellung bewegt wird, wird auch die fluidische Verbindung hergestellt, wie im Vergleich der die geschlossene Ventilstellung zeigenden Figur 4 mit den die Ausströmstellung zeigenden Figuren 5 und 6 ersichtlich. Es ist somit im dargestellten Beispiel vorgesehen, dass die Aromaspeichereinheit 4 in der geschlossenen Ventilstellung durch das Ventil 3 verschlossen ist und in der Ausströmstellung des Ventils 3 fluidisch mit dem Ventil 3, insbesondere mit einem Gasausströmkanal 10 des Ventils 3, verbunden ist.

Im Folgenden werden der Aufbau und die Funktionsweise der in den Figuren 4 bis 6 dargestellten beispielhaften Ausführungsform näher beschrieben. Der Druckbehälter 2 ist hier wie auch in den Beispielen gemäß den Figuren 1 bis 3 insbesondere ein Druckgasbehälter und zur Aufnahme des Gases unter hohem Druck ausgebildet. Insbesondere ist der Druckbehälter 2 eine so genannte Gaskartusche, insbesondere für den Getränkesprudler 1.

Der Druckbehälter 2 weist einen Behälterkörper 13 mit einem an einem unteren Ende angeordneten und insbesondere einstückig mit dem Behälterkörper 13 ausgebildeten Behälterboden auf.

An einem oberen und somit dem Behälterboden gegenüberliegenden Ende weist der Behälterkörper 13 einen Endbereich auf, welcher insbesondere einstückig mit dem Behälterkörper 13 ausgebildet ist. Der Endbereich weist eine Behälteröffnung auf.

Der Behälterboden, der Behälterkörper 13 und der Endbereich sind insbesondere als homogenes, einstückiges Bauteil ohne Fügestellen ausgebildet und gemeinsam in einem Umformverfahren, beispielsweise einem Rollumformverfahren, aus einem Materialrohling, beispielsweise aus einem Aluminiumrohling oder einem anderen Material, hergestellt.

Der Druckbehälter 2 weist des Weiteren das, insbesondere als Rückschlagventil ausgebildete, Ventil 3 auf. Dieses Ventil 3 ist zumindest abschnittsweise innerhalb des Endbereichs angeordnet. Hierzu weist der Druckbehälter 2 eine an der die Behälteröffnung des Endbereichs umgebenden Wandung innenseitig ausgeformte Befestigungsstruktur für das Ventil 3 auf. Die Befestigungsstruktur weist insbesondere ein an der Innenseite der Wandung angeordnetes Innengewinde auf. Das Ventil 3, im dargestellten Beispiel ein Ventilkörper 14 des Ventils 3, weist ein zu dem Innengewinde der Befestigungsstruktur korrespondierendes Außengewinde auf.

Das Ventil 3 umfasst im dargestellten Beispiel den Ventilkörper 14, ein Oberteil 15, einen Einsatz 16, den Ventilstößel 11 und die Aromaspeichereinheit 4. Der Ventilkörper 14 ist mittels einer Dichtung 17 abgedichtet im Behälterkörper 13 angeordnet. Der Einsatz 16 ist im Ventilkörper 14 angeordnet und ragt nach unten über den Ventilkörper 14 hinaus in den Innenraum des Druckbehälters 2 hinein. Hier weist er Einströmöffnungen 22 zum Gasausströmkanal 10 auf. An dem Einsatz 16 ist unten die Aromaspeichereinheit 4 angeordnet, welche nach oben in den Einsatz 16 hineinragt. Die Aromaspeichereinheit 4 weist ein Steigrohr 18 auf, welches bis in einem Bodenbereich der Aromaspeichereinheit 4 reicht, um dort das Aroma anzusaugen, und an einem oberen Ende T-förmig ausgebildet ist und in Ausströmöffnungen 19 der Aromaspeichereinheit 4 mündet.

Der Ventilstößel 11 ist mittels einer Druckfeder 20 auf der Aromaspeichereinheit 4 abgestützt in dem in Axialrichtung des Ventils 3 entgegen der Federkraft der Druckfeder 20 nach unten in die Ausströmstellung und mittels der Federkraft der Druckfeder 20 zurück nach oben in die geschlossene Ventilstellung verschiebbar in dem Oberteil 15 und dem Einsatz 16 angeordnet und umschließt den oberen Bereich der Aromaspeichereinheit 4. Das Oberteil 15 ist mit einer Dichtung 17 abgedichtet in den Ventilkörper 14 eingeschraubt. Es liegt abgedichtet über eine Dichtung 17 am Einsatz 16 an.

In der geschlossenen Ventilstellung liegt eine Ausformung des Ventilstößels 11 mit einer Dichtung 17 abgedichtet am Oberteil 15 an. Dadurch ist der Innenraum des Druckbehälters 2 mittels des Ventils 3 verschlossen. In der Ausströmstellung ist die Ausformung des Ventilstößels 11 nach unten vom Oberteil 15 abgehoben, wodurch der Gasausströmkanal 10 geöffnet ist, so dass das Gas durch diesen hindurch aus dem Druckbehälter 2 ausströmen kann. Der Gasausströmkanal 10 verläuft unten zwischen dem Einsatz 16 und der Aromaspeichereinheit 4, darüber zwischen dem Einsatz 16 und dem Ventilstößel 11 und darüber zwischen dem Ventilstößel 11 und dem Oberteil 15.

Der Ventilstößel 11 weist Durchströmöffnungen 21 auf, welche in der Ausströmstellung an den Ausströmöffnungen 19 der Aromaspeichereinheit 4 angeordnet sind, so dass das an diesen Durchströmöffnungen 21 vorbeiströmende Gas das Aroma über die Durchströmöffnungen 21 und die Ausströmöffnungen 19 aus der Aromaspeichereinheit 4 heraussaugen kann, wie in Figur 6 gezeigt. Durch das Verschieben des Ventilstößels 11 mittels der Druckfeder 20 in die geschlossene Ventilstellung und somit auch relativ zur Aromaspeichereinheit 4 werden auch die Durchströmöffnungen 21 im Ventilstößels 11 nach oben bewegt, so dass die Ausströmöffnungen 19 der Aromaspeichereinheit 4 durch eine Wandung des Ventilstößels 11 verschlossen sind, wie in Figur 4 gezeigt.

Im dargestellten Beispiel weist das Ventil 3 eine Aromabefüllöffnung 23 zur Befüllung der Aromaspeichereinheit 4 mit Aroma durch das Ventil 3 hindurch auf. Diese Aromabefüllöffnung 23 erstreckt sich im dargestellten Beispiel durch den Ventilstößel 11 hindurch bis zur Aromaspeichereinheit 4, welche an ihrem oberen Ende eine Öffnung als unteres Ende der Aromabefüllöffnung 23 aufweist. Ein oberes Ende der Aromabefüllöffnung 23 ist mittels eines Deckels 24 im Ventilstößel 11 verschlossen. Zum Befüllen der Aromaspeichereinheit 4 wird der Deckel 24 abgenommen und das Aroma eingefüllt, welches dann durch die Aromabefüllöffnung 23 nach unten in die Aromaspeichereinheit 4 hineinläuft. Der Deckel 24 verschießt die Aromabefüllöffnung 23 abgedichtet mittels einer Dichtung 17, so dass das Gas in der Ausströmstellung des Ventils 3 nicht über die Aromabefüllöffnung 23 ausströmen kann. Das Befüllen der Aromaspeichereinheit 4 erfolgt nur in der geschlossenen Ventilstellung, so dass auch hier kein Gas ausströmen kann.

### BEZUGSZEICHENLISTE

- 1: Getränkesprudler
- 2: Druckbehälter
- 3: Ventil
- 4: Aromaspeichereinheit
- 5: Gasführungsleitung
- 6: Sprudeldüse
- 7: Saugöffnung
- 8: Verbindungsleitung
- 9: Verlängerung
- 10: Gasausströmkanal
- 11: Ventilstößel
- 12: Getränkebehälter
- 13: Behälterkörper
- 14: Ventilkörper
- 15: Oberteil
- 16: Einsatz
- 17: Dichtung
- 18: Steigrohr
- 19: Ausströmöffnung
- 20: Druckfeder
- 21: Durchströmöffnung
- 22: Einströmöffnung
- 23: Aromabefüllöffnung
- 24: Deckel

- P1: erster Pfeil
- P2: zweiter Pfeil
- P3: dritter Pfeil

## Patentansprüche

1. Getränkesprudler (1),
mindestens umfassend einen Druckbehälter (2) zur Aufnahme von Gas, welches zur Einleitung in ein zu sprudelndes Getränk vorgesehen ist, einen Getränkebehälter (12) oder/und eine Getränkeführungsleitung für das Getränk, und eine Betätigungseinheit zum Öffnen einer fluidischen Verbindung zwischen dem Druckbehälter (2) und dem Getränkebehälter (12) oder/und der Getränkeführungsleitung,
**gekennzeichnet durch** eine Aromaspeichereinheit (4), welche ausgebildet ist zur Aufnahme eines Aromas und zur Einleitung des Aromas in das Gas oder in das Getränk.

2. Getränkesprudler (1) nach Anspruch 1,
**dadurch gekennzeichnet, dass** die Aromaspeichereinheit (4)
- in oder an einer Gasführungsleitung (5) zur Führung des Gases von einem Druckbehälter (2) in das zu sprudelnde Getränk angeordnet ist, wobei die Gasführungsleitung (5) und die Aromaspeichereinheit (4) fluidisch miteinander verbunden oder schaltbar miteinander verbindbar sind, oder
- in oder an einem Getränkebehälter (12) oder einer Getränkeführungsleitung für das Getränk angeordnet ist, wobei der Getränkebehälter (12) oder die Getränkeführungsleitung und die Aromaspeichereinheit (4) fluidisch miteinander verbunden oder schaltbar miteinander verbindbar sind, oder
- in oder an dem Druckbehälter (2), in welchem das Gas gespeichert ist, angeordnet ist, wobei der Druckbehälter (2) und die Aromaspeichereinheit (4) fluidisch miteinander verbunden oder schaltbar miteinander verbindbar sind.

3. Getränkesprudler (1) nach Anspruch 2,
**dadurch gekennzeichnet, dass** die Aromaspeichereinheit (4) zwischen dem Druckbehälter (2) und dem Getränkebehälter (12) oder in einem Ausgangsbereich der Gasführungsleitung (5) in oder an der Gasführungsleitung (5) angeordnet ist.

4. Getränkesprudler (1) nach Anspruch 2 oder 3,
**dadurch gekennzeichnet, dass** die Gasführungsleitung (5) im Bereich der Aromaspeichereinheit (4) eine Saugöffnung (7) zum Ansaugen des Aromas aus der Aromaspeichereinheit (4) aufgrund einer Strömung des Gases durch die Gasführungsleitung (5) aufweist.

5. Getränkesprudler (1) nach einem der vorhergehenden Ansprüche,
**dadurch gekennzeichnet, dass** die Aromaspeichereinheit (4) als eine Kartusche, als eine Patrone, als ein Pad oder als ein Vlies oder als eine poröse Einheit ausgebildet ist oder eine Kartusche, eine Patrone, ein Pad oder ein Vlies oder eine poröse Einheit aufweist.

6. Getränkesprudler (1) nach Anspruch 5,
**dadurch gekennzeichnet, dass** die Aromaspeichereinheit (4) oder die Kartusche oder Patrone oder das Pad oder das Vlies oder die poröse Einheit der Aromaspeichereinheit (4) auswechselbar ist.

7. Getränkesprudler (1) nach einem der vorhergehenden Ansprüche,
**dadurch gekennzeichnet, dass** die Aromaspeichereinheit (4) an einem Ventil (3) des Druckbehälters (2) angeordnet ist.

8. Getränkesprudler (1) nach Anspruch 7,
**dadurch gekennzeichnet, dass** die Aromaspeichereinheit (4) in einer geschlossenen Ventilstellung durch das Ventil (3) verschlossen ist und in einer Ausströmstellung des Ventils (3) fluidisch mit einem Gasausströmkanal (10) des Ventils (3) verbunden ist.

9. Getränkesprudler (1) nach Anspruch 7 oder 8,
**dadurch gekennzeichnet, dass** das Ventil (3) eine Aromabefüllöffnung (23) zur Befüllung der Aromaspeichereinheit (4) mit Aroma durch das Ventil (3) hindurch aufweist.

10. Druckbehälter (2) zur Aufnahme eines Gases, umfassend einen Behälterkörper (13) mit einem Behälterboden und einem dem Behälterboden gegenüberliegenden Endbereich mit einer Behälteröffnung und einem zumindest abschnittsweise innerhalb des Endbereichs angeordneten Ventil (3), **dadurch gekennzeichnet, dass**
in dem Druckbehälter (2) eine Aromaspeichereinheit (4) angeordnet ist, welche ausgebildet ist zur Aufnahme eines Aromas und zur Einleitung des Aromas in das Gas, welches zur Einleitung in ein zu sprudelndes Getränk vorgesehen ist.

11. Druckbehälter (2) nach Anspruch 10,
**dadurch gekennzeichnet, dass** die Aromaspeichereinheit (4) als eine Kartusche, als eine Patrone, als ein Pad oder als ein Vlies oder als eine poröse Einheit ausgebildet ist oder eine Kartusche, eine Patrone, ein Pad oder ein Vlies oder eine poröse Einheit aufweist.

12. Druckbehälter (2) nach Anspruch 10 oder 11,
**dadurch gekennzeichnet, dass** die Aromaspeichereinheit (4) oder die Kartusche oder Patrone oder das Pad oder das Vlies oder die poröse Einheit der Aromaspeichereinheit (4) auswechselbar ist.

13. Druckbehälter (2) nach einem der Ansprüche 10 bis 12,
**dadurch gekennzeichnet, dass** die Aromaspeichereinheit (4) an einem Ventil (3) des Druckbehälters (2) angeordnet ist.

14. Druckbehälter (2) nach Anspruch 13,
**dadurch gekennzeichnet, dass** die Aromaspeichereinheit (4) in einer geschlossenen Ventilstellung durch das Ventil (3) verschlossen ist und in einer Ausströmstellung des Ventils (3) fluidisch mit einem Gasausströmkanal (10) des Ventils (3) verbunden ist.

15. Druckbehälter (2) nach Anspruch 13 oder 14,
**dadurch gekennzeichnet, dass** das Ventil (3) eine Aromabefüllöffnung (23) zur Befüllung der Aromaspeichereinheit (4) mit Aroma durch das Ventil (3) hindurch aufweist.
